# EUROPÄISCHE PATENTSCHRIFT

(11) **EP 2 049 293 B1**
(45) Veröffentlichungstag und Bekanntmachung des Hinweises auf die Patenterteilung: **01.10.2014**
(21) Anmeldenummer: 07786376.9
(22) Anmeldetag: 27.07.2007
(51) Int. Cl.: B23B 27/10, B23B 27/16, B23B 29/04, B23C 5/28

(54) **WERKZEUGSYSTEM**
TOOLING SYSTEM
SYSTÈME D'OUTIL

(30) Priorität: 29.07.2006 DE 102006035182
(43) Veröffentlichungstag der Anmeldung: 22.04.2009
(73) Patentinhaber: Hartmetall-Werkzeugfabrik Paul Horn GmbH, 72072 Tübingen (DE)
(72) Erfinder: NOUREDDINE, Hassan, 72147 Nehren (DE)
(74) Vertreter: Keck, Stephan
(86) Internationale Anmeldenummer: PCT/EP2007/006662
(87) Internationale Veröffentlichungsnummer: WO 2008/014933

(56) Entgegenhaltungen:
- EP-A- 0 100 376
- DE-A1- 3 004 166
- DE-A1- 3 740 814
- DE-U1- 9 203 373

## Beschreibung

Die Erfindung betrifft ein Werkzeugsystem mit einem Halter, einem eine Werkzeugschneide und ein Festlegeteil aufweisenden Schneidwerkzeug und einer Spanneinrichtung, die eine Spannschraube aufweist, mittels deren eine auf das Schneidwerkzeug einwirkende Spannkraft zum Festlegen desselben am Halter erzeugbar ist, und mit einer im Halter befindlichen Zuführeinrichtung für Kühl-Schmiermittel. Außerdem bezieht sich die Erfindung auf ein Schneidwerkzeug sowie einen Halter für ein derartiges Werkzeugsystem.

Ein Werkzeugsystem dieser Art ist bereits aus dem Dokument EP 0 767 023 A1 bekannt. Werden derartige Werkzeugsysteme für Bearbeitungsvorgänge mit hohen Zerspanungsraten eingesetzt, beispielsweise bei einer Verwendung als Stoßwerkzeug, ist eine sichere und starre Befestigung des Schneidwerkzeuges am Halter von ausschlaggebender Bedeutung, insbesondere bei Bearbeitungsvorgängen, die mit hoher Genauigkeit durchzuführen sind. Neben der sicheren Abstützung des Schneidwerkzeuges am Halter muß auch eine ausreichende Zufuhr von Kühl-Schmiermittel gewährleistet sein, wobei insbesondere darauf zu achten ist, dass die Zufuhr unmittelbar zum kritischen Arbeitsbereich und in der Weise erfolgt, dass der Abtransport zerspanten Materials begünstigt wird.

Das erwähnte, bekannte Werkzeugsystem wird diesen Anforderungen nicht in ausreichendem Maße gerecht.

Aus der DE 92 03 373 U1 ist ein Decolletage-Werkzeug bekannt mit einer Schneidplatte mit einer Schneide, deren Form einer in einem Werkstück herzustellenden Kontur angepasst ist, mit einer durchgehenden Ausnehmung, die für den Durchgriff eines Befestigungsmittels vorgesehen ist, mit zwei in einem spitzen Winkel aufeinander zu laufenden Seitenflächen und mit einer Grundfläche, die in Anlage mit einem Halter für die Schneidplatte bringbar ist.

Aus der EP 0 100 376 A2, die dem Oberbegriff des Anspruchs 1 zugrundeliegt, ist ein Schneidwerkzeug bekannt, bei dem in einer Ausnehmung eines Halters eine erste Halteplatte mittels einer Klemmschraube angeschraubt ist. Darüber sind eine Schneidplatte und ein Spanbrecher aufgelegt, die mittels einer Klemmvorrichtung festgeklemmt werden. Zur Führung von Kühlmittel führt ein Kühlmittelkanal durch die Klemmschraube und wird von dort in Kühlmittelkanäle in der Schneidplatte und an der Unterseite des Spanbrechers verteilt.

Der Erfindung liegt im Hinblick hierauf die Aufgabe zugrunde, ein Werkzeugsystem zur Verfügung zu stellen, das trotz einfacher Bauweise eine sichere und wirkungsvolle Zufuhr von Betriebshilfsmitteln, wie Kühl-Schmiermittel, ermöglicht und sich darüber hinaus durch eine starre und sichere Festlegung des Schneidwerkzeuges am Halter auszeichnet.

Erfindungsgemäß ist diese Aufgabe durch ein Werkzeugsystem gelöst, das die Merkmale des Patentanspruches 1 in seiner Gesamtheit aufweist.

Danach besteht eine wesentliche Besonderheit der Erfindung darin, dass im Bereich einer Abstützfläche des Halters, die für die unmittelbare Anlage des Festlegeteils des Schneidwerkzeugs vorgesehen ist, ein Fluidraum vorhanden ist, der mit einer in üblicher Weise im Halter ausgebildeten Zuführeinrichtung für Kühl-Schmiermittel in Fluidverbindung ist und aus dem heraus dieses über einen im Schneidwerkzeug befindlichen Kanal unmittelbar zum kritischen Bereich an der Hauptschneide weiterleitbar ist. Während bei der erwähnten, bekannten Lösung das Schneidwerkzeug in einem als Zwischenhalter dienenden Adapter festgespannt ist, der seinerseits mit dem Halter verspannbar ist, ergibt sich bei der erfindungsgemäß vorgesehenen unmittelbaren Anlage des Schneidwerkzeuges sowohl eine Vereinfachung des konstruktiven Aufwandes als auch eine Verbesserung hinsichtlich der starren Lagesicherung des Schneidwerkzeuges am Halter. Gleichzeitig ist über den im Bereich der Abstützfläche des Halters vorgesehenen Fluidraum und den sich anschließenden Kanal im Schneidwerkzeug eine optimale Versorgung des kritischen Bereiches an der Hauptschneide des Schneidwerkzeuges mit Kühl-Schmiermittel gewährleistet.

Ferner ist bei dem erfindungsgemäßen Werkzeugsystem vorgesehen, dass der Fluidraum (51) durch eine eine Vertiefung in der Abstützfläche bildende Erweiterung des Endabschnitts der Gewindebohrung gebildet ist.

Der Fluidraum kann an der Abstützfläche innerhalb des Halters liegend ausgebildet sein oder innerhalb des Festlegeteils des betreffenden Schneidwerkzeuges oder auch sowohl teilweise im Halter als auch im Festlegeteil liegend ausgebildet sein.

Bei bevorzugten Ausführungsbeispielen ist eine Gewindebohrung für die Spannschraube im Halter innerhalb der Abstützfläche gelegen, wobei der Fluidraum durch eine eine Vertiefung in der Abstützfläche bildende Erweiterung des Endabschnittes der Gewindebohrung gebildet ist. Derartige Ausführungsbeispiele zeichnen sich durch eine besonders einfache Bauweise aus.

Die Anordnung kann so getroffen sein, dass die im Halter befindliche Zuführeinrichtung für Kühl-Schmiermittel einen im Halter in Längsrichtung verlaufenden Kanal und einen von diesem abzweigenden, zur Achsrichtung schräg verlaufenden Verbindungskanal aufweist, dessen Austrittsöffnung im Fluidraum gelegen ist.

Bei einem besonders vorteilhaften Ausführungsbeispiel, bei dem die Werkzeugschneide für die spanende Bearbeitung um einen vorgebbaren Überstand über den Halter vorsteht, kann der Halter außenumfangsseitig mit einem Abstützteil versehen sein, das in Richtung auf den Überstand der Werkzeugschneide vorspringt und die Fortsetzung der Abstützfläche für eine zumindest teilweise Anlage des Schneidwerkzeuges bildet. Dadurch ist das Schneidwerkzeug nicht nur innerhalb des Umfangsbereiches des Halters gegen die Arbeitsbelastungen abgestützt, sondern auch in einem außerhalb des Umfangsbereiches des Halters gelegenen Bereich, d. h. an der Stelle, die der auskragenden Werkzeugschneide benachbart ist. Schneidkräfte und erzeugte Momente werden daher in unmittelbarer Nachbarschaft der Angriffsstelle über das vorspringende Abstützteil in den Halter eingeleitet, was zu einer Verringerung der am Festlegeteil des Schneidwerkzeuges wirkenden Lastmomente beiträgt.

Vorzugsweise hat der Halter die Form eines eine Längsachse definierenden Schaftes, wobei das Abstützteil durch einen, bezogen auf die Längsachse, aus der Umfangsfläche des Schaftes radial vorstehenden, mit diesem einstückigen Abstützkörper gebildet ist. Durch die Abstützung mittels eines mit dem Schaft einstückigen Körpers ergibt sich ein besonders starrer Verbund zwischen Schneidwerkzeug und Halter.

Bei besonders vorteilhaften Ausführungsbeispielen bildet der Schaft zumindest an seinem freien Ende einen Rotationskörper, wobei eine an dessen Stirnfläche und dessen Umfang offene Vertiefung einen Sitz für die Aufnahme des Festlegeteiles des Schneidwerkzeuges bildet.

Die Anordnung kann hierbei so getroffen sein, dass der Abstützkörper derart axial an den Sitz angrenzt, dass seine zur vorderen Stirnfläche des Schaftes weisende Abstützfläche eine über den Umfang des Rotationskörpers radial vorstehende Fortsetzung der rückwärtigen Endfläche des Sitzes bildet. Somit bildet der Abstützkörper zusammen mit der rückwärtigen Endfläche des Sitzes eine durchgehende Abstützfläche für das Schneidwerkzeug, das mit einer ebenen Anlagefläche seines Festlegeteiles in formschlüssiger Anlage an der ebenen rückwärtigen Endfläche des Sitzes und der diese fortsetzenden Abstützfläche des Abstützkörpers anliegen kann. Mit anderen Worten gesagt, ergibt sich somit eine flächige Anlage, ausgehend vom Grund der Vertiefung bis zum radial außenliegenden Ende des Abstützkörpers. Wenn das Werkzeugsystem für eine Bearbeitung vorgesehen ist, bei der entlang der Längsachse wirkende Kraftkomponenten der Schneidkraft auftreten, wenn beispielsweise das Werkzeugsystem als Stoßwerkzeug vorgesehen ist, sind vorzugsweise die Anlagefläche des Festlegeteiles, die rückwärtige Endfläche des Sitzes und die sich daran anschließende Abstützfläche des Abstützkörpers in einer Radialebene gelegen.

Bei besonders vorteilhaften Ausführungsbeispielen besitzt das Schneidwerkzeug die Gestalt eines vorzugsweise aus einem Hartmetallwerkstoff gebildeten Blockes, dessen Schneidenteil einen Fortsatz des Festlegeteiles bildet, wobei dieser das Schneidenteil bildenden Fortsatz derart geformt ist, dass er den Überstand der Werkzeugschneide über den Halter und den Abstützkörper hinaus bildet, und wobei der Fortsatz mit einer Endfläche als Teil der Anlagefläche mit der Abstützfläche des Abstützkörpers zusammenwirkt und die Werkzeugschneide zumindest eine Schneidkante aufweist, die an oder bei der der Stirnfläche des Halters zugewandten Vorderseite des Schneidenteiles gelegen ist.

Hierbei kann zumindest eine Hauptschneide vorhanden sein, die sich an der Vorderseite des Fortsatzes in einer zur Abstützfläche parallelen Ebene erstreckt. Bei translatorischer Bewegung des Halters bildet das System hierbei ein Stoßwerkzeug.

Für eine zweckmäßige Spanformung kann hierbei vorgesehen sein, dass die der rückwärtigen Endfläche entgegengesetzte vordere Seite des Fortsatzes eine sich an die Hauptschneide anschließende Spanfläche mit geringer Wölbung aufweist, die so gewählt ist, dass sich, abhängig von den Eigenschaften des Werkstückes, den Schneidbedingungen und dergleichen, der gewünschte Spanfluß ergibt.

Bei vorteilhaften Ausführungsbeispielen besitzt der Block des Schneidwerkzeuges zumindest über den Großteil des Festlegeteiles einen im großen Ganzen keilförmigen Umriß mit Seitenwänden, die von einem dem Fortsatz entgegengesetzten Scheitelbereich aus V-förmig divergieren.

Bei einer derartigen Formgebung kann der Sitz für die Zusammenwirkung mit den Seitenwänden des Festlegeteiles des Schneidwerkzeuges Sitzwände besitzen, die, von einem Vertiefungsgrund ausgehend, radial nach außen einen divergierenden Verlauf besitzen.

Um optimale Sitzverhältnisse zu gewährleisten ist vorzugsweise die Anordnung so getroffen, dass die mit den Sitzwänden zusammenwirkenden Seitenwände des Festlegeteiles des Schneidwerkzeuges von der Ebene abweichende Teilbereiche aufweisen, wobei beispielsweise eine ballige Formgebung im Kontaktbereich zwischen Seitenwänden und Sitzwänden vorgesehen ist.

Gegenstand der Erfindung sind auch ein Schneidwerkzeug sowie ein Halter für ein Schneidwerkzeug, wobei diese Gegenstände die Merkmale der Patentansprüche 18 bzw. 19 aufweisen.

Nachstehend ist die Erfindung anhand der Zeichnungen im Einzelnen erläutert. Es zeigen:
- Fig. 1 eine auseinander gezogen gezeichnete perspektivische Schrägansicht eines Ausführungsbeispieles des erfindungsgemäßen Werkzeugsystems;
- Fig. 2 eine gegenüber Fig. 1 vergrößert gezeichnete perspektivische Schrägansicht lediglich des vorderen Endabschnittes des Halters des Ausführungsbeispieles ohne angebrachtes Schneidwerkzeug;
- Fig. 3 eine in noch größerem Maßstab dargestellte perspektivische Schrägansicht lediglich eines Schneidwerkzeuges für die Benutzung beim erfindungsgemäßen Werkzeugsystem und
- Fig. 4 einen in näherungsweise dem gleichen Maßstab wie Fig. 2 gezeichneten Längsschnitt nur des vorderen Abschnittes des Werkzeugsystems.

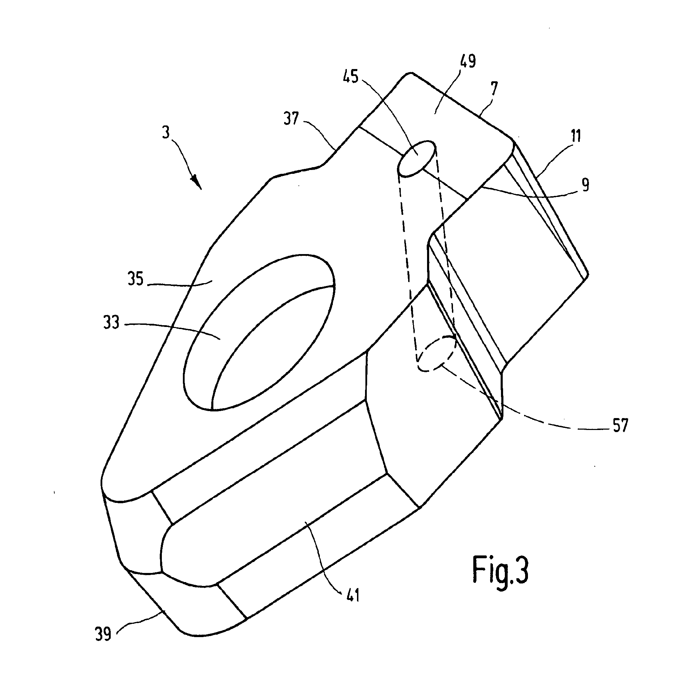

Nachstehend ist die Erfindung anhand eines Ausführungsbeispieles erläutert, bei dem das Werkzeugsystem ein Stoßwerkzeug bildet, wobei der Halter 1 mit dem an ihm stirnseitig festgelegten Schneidwerkzeug 3 in Richtung der Halterlängsachse 5 bewegt wird, um eine Stoßbearbeitung mit einer Hauptschneide 7 des Schneidwerkzeuges 3 an einem nicht gezeigten Werkstück durchzuführen, wobei sich die Hauptschneide 7 senkrecht zur Längsachse 5 erstreckt. Beim Einsatz als Stoßwerkzeug wirkt beim Arbeitsvorgang eine Schneid- oder Arbeitskraft, die größtenteils entlang der Längsachse 5 gerichtet ist. Bei einer alternativen Anwendung des Werkzeugsystems für Drehbearbeitung oder Bohrbearbeitung, bei denen ein Zerspanungsvorgang an neben der Hauptschneide 7 gelegenen Schneidkanten 9 und/oder 11 stattfinden kann, s. Fig.3, ergibt sich ebenfalls eine Kraftkomponente entlang der Längsachse 5.

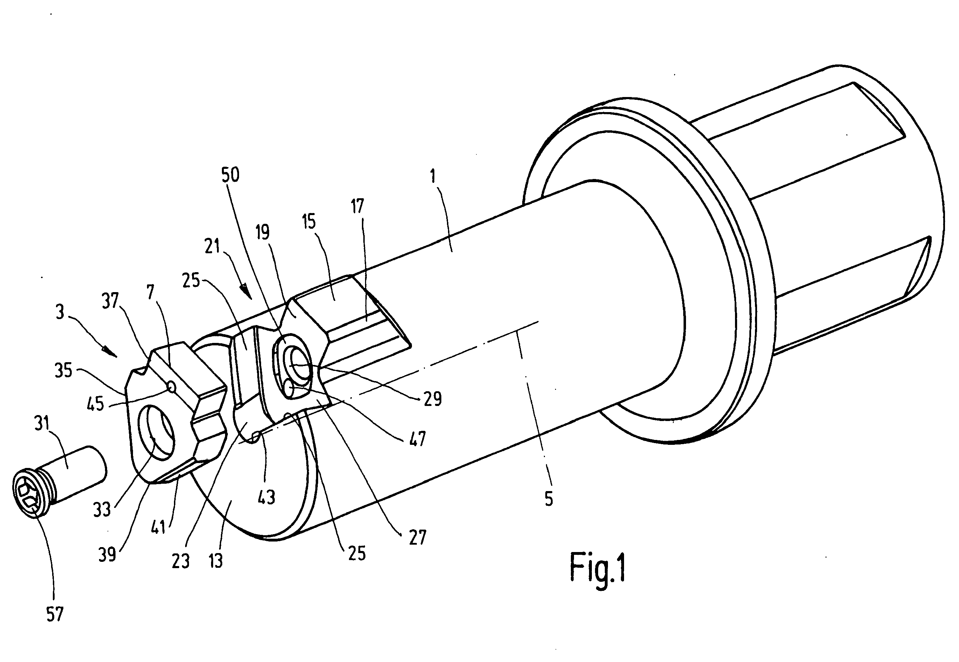

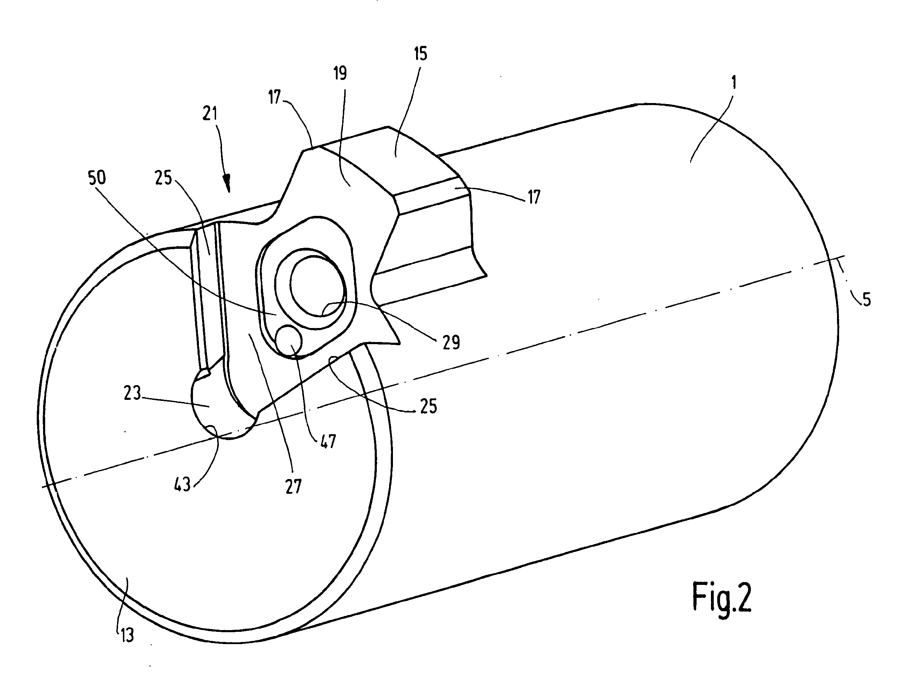

Fig.1 und 2 verdeutlichen die bei der Erfindung vorgesehene Abstützung des Schneidwerkzeuges 3 am Halter 1, der die Form eines einen Rotationskörper bildenden Schaftes besitzt, wobei in der Nähe der Stirnfläche 13 des Halters 1 ein mit diesem einstückig ausgebildeter Abstützkörper 15 radial vorstehend ausgebildet ist. Der Abstützkörper 15 besitzt die Form eines zu seiner Ober- oder Außenseite hin leicht abgeschrägten Klotzes, der, abgesehen von seinen Abschrägungen 17, einen etwa quadratischen Querschnitt besitzt. An seiner der Stirnfläche 13 zugewandten Seite bildet der Abstützkörper 15 eine in einer Radialebene liegende ebene Abstützfläche 19. Diese befindet sich von der vorderen Stirnfläche 13 des Halters 1 in einem axialen Abstand, welcher der axialen Erstreckung eines am Halter 1 befindlichen Sitzes 21 entspricht, in dem das Schneidwerkzeug 3 aufnehmbar und darin festlegbar ist.

Wie aus Fig. 1 und 2 erkennbar ist, ist der Sitz 21 durch eine an der Stirnfläche 13 und am Umfang des Halters 1 offene Vertiefung gebildet. Diese weist, ausgehend vom Vertiefungsgrund 23, der in der Nähe der Längsachse 5 gelegen ist, Sitzwände 25 auf, die sich, ausgehend vom Grund 23 und zueinander divergierend, zum Außenumfang des Halters 1 hin erstrecken. Der Aufnahmeraum des Sitzes 21 für das Schneidwerkzeug 3 hat daher einen V-förmigen Querschnitt.

Die rückwärtige Endfläche 27 des Sitzes 21 liegt in gemeinsamer Ebene mit der Abstützfläche 19 des Abstützkörpers 15, so dass die Abstützfläche 19 eine unmittelbare Fortsetzung der hinteren Endfläche 27 des Sitzes 21 bildet. Somit steht für das im Sitz 21 festgelegte Schneidwerkzeug 3 eine durchgehende, plane Kontaktfläche als Gesamt-Abstützfläche 19, 27 zur Verfügung, die sich über den Außenumfang des Halters 1 hinaus radial mit der Abstützfläche 19 des Abstützkörpers 15 fortsetzt.

Das Schneidwerkzeug 3 weist an seiner der vorderen Schneide 7 entgegengesetzten Rückseite eine plane Anlagefläche auf, die, wenn das Schneidwerkzeug 3 im Sitz 21 aufgenommen ist, formschlüssig an der hinteren Endfläche 27 und der sie radial fortsetzenden Abstützfläche 19 anliegt. Wie aus Fig.1 und 2 zur ersehen ist, befindet sich am Übergangsbereich zwischen Endfläche 27 und Abstützfläche 19 eine Gewindebohrung 29 für eine Spannschraube 31 in Form einer eine Durchgangsbohrung 33 im Schneidwerkzeug 3 durchgreifenden Senkkopfschraube, mittels deren das Schneidwerkzeug 3 im Sitz 21 festspannbar ist, wobei sich der Festlegeteil 35 des Schneidwerkzeuges 3 mit Seitenwänden 41 in seitlicher Anlage an den Sitzwänden 25 befindet und der der Schneide 7 benachbarte Schneidenteil 37 des Schneidwerkzeuges 3 an der Abstützfläche 19 des Abstützkörpers anliegt.

Wie ebenfalls aus den Figuren ersichtlich, hat das Festlegeteil 35 des blockförmig gestalteten Schneidwerkzeuges 3 im großen Ganzen eine Keilform, die dem V-förmigen Aufnahmequerschnitt des Sitzes 21 angepaßt ist, wobei die Keilform im unteren Scheitelbereich 39 abgerundet ist. Die sich vom Scheitelbereich 39 divergierend erstreckenden Seitenwände 41 des Festlegeteils 35 weisen von der ebenen Gestalt abweisende Flächenbereiche oder eine gewisse ballige Formgebung für eine optimale Anlage an den Sitzwänden 25 auf. Wie Fig. 1 und 2 zeigen, sind die Enden der Sitzwände 25 am Grund 23 der den Sitz 21 bildenden Vertiefung durch eine Ausnehmung 43 in Form einer Teilbohrung voneinander getrennt, so dass am Grund 23 ein Freiraum zwischen Halter 1 und Scheitelbereich 39 des im Sitz 21 aufgenommenen Schneidwerkzeuges erzeugt wird.

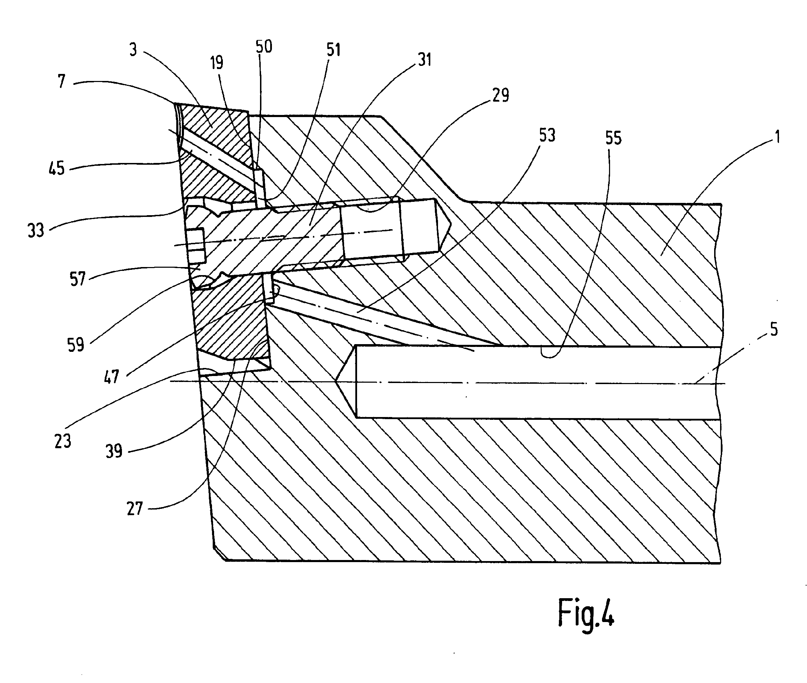

Wie Fig.3 zeigt, weist das Schneidwerkzeug 3 einen Kanal 45 für ein Kühl-Schmiermittel auf, wobei der Kanal 45 in der Nähe der Hauptschneide 7 mündet. Die Fig.4 zeigt nähere Einzelheiten der Zufuhr des Kühl-Schmiermittels zum Kanal 45 des Schneidwerkzeuges 3 sowie Einzelheiten der durch die Gewindebohrung 29 und die Spannschraube 31 gebildeten Spanneinrichtung. Wie ersichtlich, weist die Gewindebohrung 29 an dem an die Endfläche 27 des Sitzes 21 angrenzenden Ende eine Erweiterung 50 auf. Bei im Sitz 21 aufgenommenem Schneidwerkzeug 3 ist dadurch ein die Spannschraube 31 umgebender, durch die anliegende Wand des Festlegeteils 35 geschlossener Ringraum 51 gebildet, in den die Austrittsöffnung 47 einer im Halter 1 in üblicher Weise ausgebildeten Zuführeinrichtung mündet. Diese weist beim vorliegenden Beispiel einen im Halter 1 schräg verlaufenden Verbindungskanal 53 zwischen der Austrittsöffnung 47 am Ringraum 51 und einem Längskanal 55 im Halter 1 auf. Dadurch entsteht beim Festspannen eines Schneidwerkzeuges 3, das einen Kanal 45 enthält, dessen Kanaleingang 57 rückseitig nahe der Bohrung 33 im Ringraum 51 gelegen ist und sich von dort im Schrägverlauf bis zum Kanalausgang des Kanals 45 nahe der Hauptschneide 7 erstreckt, eine durchgehende Fluidverbindung, über die Kühl-Schmiermittel unmittelbar zum kritischen Bereich an der Hauptschneide 7 gelangt.

Wie aus Fig.4 außerdem zu entnehmen ist, sind die Lagebeziehungen zwischen den Sitzwänden 25 des Sitzes 21 im Halter 1 und den Seitenwänden 41 des Schneidwerkzeuges 3 so gewählt, dass die Bohrung 33 im Schneidwerkzeug 3, wenn dessen Seitenwände 41 an den Seitenwänden 25 des Sitzes 21 anliegen, leicht exzentrisch gegenüber der Achse der Gewindebohrung 29 ist. Beim Festziehen der Spannschraube 31 kommt diese daher mit einer Konusfläche 59 am Schraubenkopf 57 zur Anlage am Endrand der Durchgangsbohrung 33 im Schneidwerkzeug 3, so dass, wie aus Fig.4 entnehmbar ist, beim Festziehen der Spannschraube 31 nicht nur eine Spannkraft gegen die Endfläche 27 des Sitzes 21 hin erzeugt wird, sondern auch eine Kraftkomponente, die das Schneidwerkzeug 3 gegen den Grund 23 des Sitzes 21 hin vorspannt, wodurch eine besonders sichere und feste Lagefixierung des Schneidwerkzeuges 3 im Sitz 1 zustande kommt.

## Patentansprüche

1. Werkzeugsystem mit einem Halter (1), einem eine Werkzeugschneide (7) und ein Festlegeteil (35) aufweisenden Schneidwerkzeug (3) und einer Spanneinrichtung, die eine Spannschraube (31) aufweist, mittels deren eine auf das Schneidwerkzeug (3) einwirkende Spannkraft zum Festlegen desselben am Halter (1) erzeugbar ist, und mit einer im Halter (1) befindlichen Zuführeinrichtung (53,55) für Kühl-Schmiermittel, wobei für eine unmittelbare Anlage des durch die Spannschraube (31) angepressten Festlegeteils (35) des Schneidwerkzeuges (3) am Halter (1) eine Abstützfläche (19,27) ausgebildet ist und ein an diese angrenzender und durch Wandteile des anliegenden Festlegeteils (35) des Schneidwerkzeuges (3) begrenzter Fluidraum (51) gebildet ist, der mit der Zuführeinrichtung (53,55) für Kühl-Schmiermittel in Fluidverbindung ist und von dem aus über einen von der anliegenden Wand des Festlegeteils (35) ausgehenden, im Schneidwerkzeug (3) befindlichen Kanal (45) Kühl-Schmiermittel zum Bereich der Hauptschneide (7) weiterleitbar ist,
**dadurch gekennzeichnet, dass** eine Gewindebohrung (29) für die Spannschraube (31) im Halter (1) innerhalb der Abstützfläche (19,27) gelegen ist und der Fluidraum (51) durch eine eine Vertiefung in der Abstützfläche (19,27) bildende Erweiterung (50) des Endabschnittes der Gewindebohrung (29) gebildet ist.

2. Werkzeugsystem nach Anspruch 1, **dadurch gekennzeichnet, dass** der Fluidraum innerhalb des an die Abstützfläche (19,27) angrenzenden Bereiches des Halters (1) und/oder innerhalb des angrenzenden Bereiches des Festlegeteils (35) des Schneidwerkzeuges (3) ausgebildet ist.

3. Werkzeugsystem nach einem der Ansprüche 1 bis 2, **dadurch gekennzeichnet, dass** die im Halter (1) befindliche Zuführeinrichtung für Kühl-Schmiermittel einen im Halter (1) in Längsrichtung verlaufenden Kanal (55) und einen von diesem abzweigenden, zur Achsrichtung (5) schräg verlaufenden Verbindungskanal (53) aufweist, dessen Austrittsöffnung (47) im Fluidraum (51) gelegen ist.

4. Werkzeugsystem nach einem der Ansprüche 1 bis 3, **dadurch gekennzeichnet, dass** die Werkzeugschneide (7) für die spanende Bearbeitung um einen vorgebbaren Überstand über den Halter (1) vorsteht, und dass der Halter (1) außenumfangseitig mit einem Abstützteil (15) versehen ist, das in Richtung auf den Überstand der Werkzeugschneide (7) vorspringt und die Fortsetzung der Abstützfläche (19,27) für eine zumindest teilweise Anlage des Schneidwerkzeuges (3) bildet.

5. Werkzeugsystem nach Anspruch 4, **dadurch gekennzeichnet, dass** der Halter die Form eines eine Längsachse (5) definierenden Schaftes (1) besitzt und dass das Abstützteil durch einen, bezogen auf die Längsachse (5), aus der Umfangsfläche des Schaftes (1) radial vorstehenden, mit diesem einstückigen Abstützkörper (15) gebildet ist.

6. Werkzeugsystem nach Anspruch 5, **dadurch gekennzeichnet, dass** der Schaft (1) zumindest an seinem freien Ende einen Rotationskörper bildet, wobei eine an dessen Stirnfläche (13) und dessen Umfang offene Vertiefung einen Sitz (21) für die Aufnahme des Festlegeteiles (35) des Schneidwerkzeuges (3) bildet.

7. Werkzeugsystem nach Anspruch 6, **dadurch gekennzeichnet, dass** der Abstützkörper (15) derart axial an den Sitz (21) angrenzt, dass seine zur vorderen Stirnfläche (13) des Schaftes (1) weisende Abstützfläche (19) eine über den Umfang des Rotationskörpers radial vorstehende Fortsetzung der rückwärtigen Endfläche (27) des Sitzes (21) bildet.

8. Werkzeugsystem nach Anspruch 7, **dadurch gekennzeichnet, dass** das Festlegeteil (35) des Schneidwerkzeuges (3) eine ebene Anlagefläche für eine formschlüssige Anlage an der ebenen rückwärtigen Endfläche (27) des Sitzes (21) und der diese fortsetzenden Abstützfläche (19) des Abstützkörpers (15) aufweist.

9. Werkzeugsystem nach Anspruch 8, **dadurch gekennzeichnet, dass** Anlagefläche des Festlegeteiles (35), rückwärtige Endfläche (27) des Sitzes (21) und die sich daran anschließende Abstützfläche (19) des Abstützkörpers (15) zur Aufnahme von entlang der Längsachse (5) wirkenden Kraftkomponenten der Schneidkraft in einer Radialebene gelegen sind.

10. Werkzeugsystem nach einem der Ansprüche 7 bis 9, **dadurch gekennzeichnet, dass** das Schneidwerkzeug (3) die Gestalt eines vorzugsweise aus einem Hartmetallwerkstoff gebildeten Blockes besitzt, dessen Schneidenteil (37) einen Fortsatz des Festlegeteiles (35) bildet, wobei der Fortsatz derart geformt ist, dass er den Überstand der Werkzeugschneide (7) über den Halter (1) und den Abstützkörper (15) hinaus bildet, und wobei der Fortsatz mit einer Endfläche als Teil der Anlagefläche mit der Abstützfläche (19) des Abstützkörpers (15) zusammenwirkt und die Werkzeugschneide (7) zumindest eine Schneidkante aufweist, die an oder bei der der Stirnfläche (13) zugewandten Vorderseite des Schneidenteiles (37) gelegen ist.

11. Werkzeugsystem nach Anspruch 10, **dadurch gekennzeichnet, dass** zumindest eine Hauptschneide (7) vorhanden ist, die sich an der Vorderseite des Fortsatzes in einer zur Abstützfläche (19) parallelen Ebene erstreckt.

12. Werkzeugsystem nach Anspruch 11, **dadurch gekennzeichnet, dass** die vordere Seite des Fortsatzes eine sich an die Hauptschneide (7) anschließende Spanfläche (49) mit geringer Wölbung (51) aufweist.

13. Werkzeugsystem nach einem der Ansprüche 10 bis 12, **dadurch gekennzeichnet, dass** der Block des Schneidwerkzeuges (3) zumindest über den Großteil des Festlegeteiles (35) einen im großen Ganzen keilförmigen Umriss mit Seitenwänden (41) besitzt, die, von einem dem Fortsatz entgegengesetzten Scheitelbereich (39) ausgehend, V-förmig divergieren.

14. Werkzeugsystem nach Anspruch 13, **dadurch gekennzeichnet, dass** der Sitz (21) für die Zusammenwirkung mit den Seitenwänden (41) des Festlegeteiles (35) des Schneidwerkzeuges (3) Sitzwände (25) mit von einem Vertiefungsgrund (23) radial nach außen divergierendem Verlauf besitzt.

15. Werkzeugsystem nach Anspruch 14, **dadurch gekennzeichnet, dass** die mit den Sitzwänden (25) zusammenwirkenden Seitenwände (41) des Festlegeteiles (35) des Schneidwerkzeuges (3) von der Ebene abweichende Teilbereiche aufweisen.

16. Werkzeugsystem nach Anspruch 15, **dadurch gekennzeichnet, dass** der Grund (23) der den Sitz (21) bildenden Vertiefung des Schaftes (1) eine einen Abstand zwischen dem Scheitel der Keilform des Festlegeteiles (35) bildende Ausnehmung (43) und/oder der Scheitelbereich (39) des Festlegeteiles (35) eine diesen Abstand erzeugende Verkürzung aufweist bzw. aufweisen.

17. Halter für ein Schneidwerkzeug eines Werkzeugsystems nach einem der Ansprüche 1 bis 16 mit einer Abstützfläche (19,27) für die Anlage eines mittels einer Spanneinrichtung (31 ,29) anpressbaren Schneidwerkzeuges (3) und mit einem an der Abstützfläche (19,27) ausgebildeten Fluidraum (51), der mit einer im Halter (1) befindlichen Zuführeinrichtung (53,55) für Kühl-Schmiermittel in Fluidverbindung ist,
**dadurch gekennzeichnet, dass** eine Gewindebohrung (29) für die Spannschraube (31) im Halter (1) innerhalb der Abstützfläche (19,27) gelegen ist und der Fluidraum (51) durch eine eine Vertiefung in der Abstützfläche (19,27) bildende Erweiterung (50) des Endabschnittes der Gewindebohrung (29) gebildet ist.

## Claims

1. A tool system, comprising a holder (1), a cutting tool (3) which has a tool cutter (7) and a locating part (35), and a clamping arrangement which has a clamping screw (31) by means of which a clamping force acting upon the cutting tool (3) can be produced for the purpose of fixing the latter in position on the holder (1), and comprising a supply arrangement (53, 55) for cooling lubricant, said supply arrangement (53, 55) being provided in the holder (1), wherein a support face (19, 27) for direct bearing contact of the locating part (35) of the cutting tool (3) that is pressed-on by the clamping screw (31) is provided on the holder (1), and wherein there is constituted a fluid space (51) which adjoins this support face (19, 27), is delimited by wall parts of the bearing locating part (35) of the cutting tool (3) and is fluidly connected to the supply arrangement (53, 55) for cooling lubricant, and from which cooling lubricant can be passed on to the region of the main cutter (7) via a channel (45) which emanates from the adjoining wall of the locating part (35) and is provided in the cutting tool (3),
**characterized in that** a threaded bore (29) for the clamping screw (31) is located in the holder (1) within the support face (19, 27), and the fluid space (51) is constituted by a widened portion (50) of the end portion of the threaded bore (29), which widened portion (50) constitutes a cavity in the support face (19, 27).

2. The tool system according to claim 1, **characterized in that** the fluid space is realized within that region of the holder (1) which adjoins the support face (19, 27) and/or within the adjoining region of the locating part (35) of the cutting tool (3).

3. The tool system according to any of claims 1 or 2, **characterized in that** the supply arrangement, provided in the holder (1), for cooling lubricant has a channel (55) extending in longitudinal direction in the holder (1), and has a connecting channel (53), which branches off from this latter channel and extends obliquely relative to the axial direction (5), and whose outlet aperture (47) is located in the fluid space (51).

4. The tool system according to any of claims 1 to 3, **characterized in that** the tool cutter (7) for material-removing machining projects over the holder (1) by a predefinable projecting length, and the holder (1) is provided, on its outer circumference, with a support part (15) which projects in the direction of the projecting length of the tool cutter (7) and constitutes the continuation of the support face (19, 27) for an at least partial bearing contact of the cutting tool (3).

5. The tool system according to claim 4, **characterized in that** the holder has the form of a shaft (1) defining a longitudinal axis (5), and the support part is constituted by support body (15) which, in relation to the longitudinal axis (5), projects radially from the circumferential surface of the shaft (1) and is integral with the latter.

6. The tool system according to claim 5, **characterized in that** the shaft (1), at least at its free end, constitutes a body of revolution, wherein a cavity that is open on the front face (13) and on the circumference of the shaft constitutes a seat (21) for receiving the locating part (35) of the cutting tool (3).

7. The tool system according to claim 6, **characterized in that** the support body (15) axially adjoins the seat (21) in such a way that its support face (19) facing towards the front end face (13) of the shaft (1) constitutes a continuation of the rearward end face (27) of the seat (21), which continuation projects radially over the circumference of the body of revolution.

8. The tool system according to claim 7, **characterized in that** the locating part (35) of the cutting tool (3) has a flat bearing face for positive bearing contact on the flat rearward end face (27) of the seat (21) and on the support face (19) of the support body (15) that continues this end face.

9. The tool system according to claim 8, **characterized in that** the bearing face of the locating part (35), the rearward end face (27) of the seat (21) and the adjoining support face (19) of the support body (15) are located in a radial plane in order to absorb force components of the cutting force that act along the longitudinal axis (5).

10. The tool system according to any of claims 7 to 9, **characterized in that** the cutting tool (3) has the form of a block, preferably composed of a hard-metal material, whose cutter part (37) constitutes a continuation of the locating part (35), the continuation being formed in such a way that it constitutes the projection of the tool cutter (7) beyond the holder (1) and the support body (15), and the continuation cooperating, by means of an end face as part of the bearing face, with the support face (19) of the support body (15), and the tool cutter (7) having at least one cutting edge which is located on or near the front side of the cutter part (37) that faces towards the front face (13).

11. The tool system according to claim 10, **characterized in that** there is at least one main cutter (7) which extends, on the front side of the continuation, in a plane parallel to the support face (19).

12. The tool system according to claim 11, **characterized in that** the front side of the continuation comprises a cutting face (49) which adjoins the main cutter (7) and has a slight convexity (51).

13. The tool system according to any of claims 10 to 12, **characterized in that** the block of the cutting tool (3) has, at least over the majority of the locating part (35), an overall wedge-shaped outline with side walls (41) which, going out from a tip region (39) opposite the continuation, diverge in a V shape.

14. The tool system according to claim 13, **characterized in that**, for the purpose of cooperation with the side walls (41) of the locating part (35) of the cutting tool (3), the seat (21) has seat walls (25) having a course which diverges radially outwards from a base (23) of a cavity.

15. The tool system according to claim 14, **characterized in that** the side walls (41) of the locating part (35) of the cutting tool (3) which cooperate with the seat walls (25) have partial regions which diverge from the plane.

16. The tool system according to claim 15, **characterized in that** the base (23) of the hollow of the shaft (1) constituting the seat (21) has a recess (43) which constitutes a distance from the tip of the wedge shape of the locating part (35) and/or the tip region (39) of the locating part (35) has a shortening which produces this distance.

17. A holder for a cutting tool of a tool system according to any of claims 1 to 16, comprising a support face (19, 27) for the bearing contact of a cutting tool (3) that can be pressed-on by means of a clamping arrangement (31, 29), and comprising a fluid space (51), which is realized on the support face (19, 27) and which is fluidly connected to a supply arrangement (53, 55) for cooling lubricant which is provided in the holder (1),
**characterized in that** a threaded bore (29) for the clamping screw (31) is located in the holder (1) within the support face (19, 27), and the fluid space (51) is constituted by a widened portion (50) of the end portion of the threaded bore (29), which widened portion (50) constitutes a cavity in the support face (19, 27).

## Revendications

1. Système d'outil comprenant un support (1), un outil de coupe (3) comprenant un tranchant d'outil (7) et une partie de fixation (35), et un dispositif de serrage qui comprend une vis de serrage (31) au moyen de laquelle une force de serrage agissant sur l'outil de coupe (3) peut être générée pour fixer celui-ci sur le support (1), et comprenant un dispositif d'alimentation (53, 55), se trouvant dans le support (1), pour du lubrifiant de refroidissement, une surface de support (19, 27) étant réalisée pour un appui direct de la partie de fixation (35), serrée par la vis de serrage (31), de l'outil de coupe (3) contre le support (1), et un espace de fluide (51) adjacent à cette surface de support et délimité par des parties de paroi de la partie de fixation (35) en appui de l'outil de coupe (3) étant formé, lequel espace de fluide est en liaison fluidique avec le dispositif d'alimentation (53, 55) pour du lubrifiant de refroidissement et, à partir de cet espace de fluide, du lubrifiant de refroidissement peut être guidé jusqu'à la région du tranchant principal (7) par le biais d'un canal (45) se trouvant dans l'outil de coupe (3) et partant de la paroi en appui de la partie de fixation (35),
**caractérisé en ce qu'**un alésage fileté (29) pour la vis de serrage (31) est situé dans le support (1) à l'intérieur de la surface de support (19, 27), et l'espace de fluide (51) est formé par un élargissement (50) de la portion d'extrémité de l'alésage fileté (29) formant un renfoncement dans la surface de support (19, 27).

2. Système d'outil selon la revendication 1, **caractérisé en ce que** l'espace de fluide est réalisé à l'intérieur de la région du support (1) adjacente à la surface de support (19, 27) et/ou à l'intérieur de la région adjacente de la partie de fixation (35) de l'outil de coupe (3).

3. Système d'outil selon l'une quelconque des revendications 1 et 2, **caractérisé en ce que** le dispositif d'alimentation pour du lubrifiant de refroidissement se trouvant dans le support (1) comprend un canal (55) s'étendant dans le support (1) dans la direction longitudinale et un canal de liaison (53) bifurquant de celui-ci et s'étendant de manière oblique par rapport à la direction axiale (5) et dont l'ouverture de sortie (47) est située dans l'espace de fluide (51).

4. Système d'outil selon l'une quelconque des revendications 1 à 3, **caractérisé en ce que** le tranchant d'outil (7) pour l'usinage par enlèvement de copeaux fait saillie au-delà du support (1) d'une longueur de saillie pouvant être prédéfinie, et **en ce que** le support (1) est pourvu, du côté de la périphérie extérieure, d'une partie de support (15) qui fait saillie dans la direction de la longueur de saillie du tranchant d'outil (7) et forme le prolongement de la surface de support (19, 27) pour un appui au moins partiel de l'outil de coupe (3).

5. Système d'outil selon la revendication 4, **caractérisé en ce que** le support présente la forme d'une queue (1) définissant un axe longitudinal (5), et **en ce que** la partie de support est formée par un corps de support (15) faisant saillie radialement, par rapport à l'axe longitudinal (5), à partir de la surface périphérique de la queue (1) et réalisé d'une seule pièce avec celle-ci.

6. Système d'outil selon la revendication 5, **caractérisé en ce que** la queue (1) forme au moins à son extrémité libre un corps de rotation, un renfoncement ouvert au niveau de sa surface frontale (13) et de sa périphérie formant un siège (21) pour la réception de la partie de fixation (35) de l'outil de coupe (3).

7. Système d'outil selon la revendication 6, **caractérisé en ce que** le corps de support (15) est adjacent axialement au siège (21), de telle sorte que sa surface de support (19) tournée vers la surface frontale avant (13) de la queue (1) forme un prolongement, faisant saillie radialement au-delà de la périphérie du corps de rotation, de la surface d'extrémité arrière (27) du siège (21).

8. Système d'outil selon la revendication 7, **caractérisé en ce que** la partie de fixation (35) de l'outil de coupe (3) comprend une surface d'appui plane pour un appui par engagement par complémentarité de formes contre la surface d'extrémité arrière plane (27) du siège (21) et la surface de support (19), prolongeant celle-ci, du corps de support (15).

9. Système d'outil selon la revendication 8, **caractérisé en ce que** la surface d'appui de la partie de fixation (35), la surface d'extrémité arrière (27) du siège (21) et la surface de support (19) s'y raccordant du corps de support (15) sont situées dans un plan radial pour recevoir des composantes de force de la force de coupe agissant le long de l'axe longitudinal (5).

10. Système d'outil selon l'une quelconque des revendications 7 à 9, **caractérisé en ce que** l'outil de coupe (3) présente la forme d'un bloc formé de préférence à partir d'un matériau métallique dur, dont la partie de coupe (37) forme un prolongement de la partie de fixation (35), le prolongement étant formé de telle sorte qu'il forme la longueur de saillie du tranchant d'outil (7) au-delà du support (1) et du corps de support (15), et le prolongement coopérant, par une surface d'extrémité faisant office de partie de la surface d'appui, avec la surface de support (19) du corps de support (15), et le tranchant d'outil (7) comprenant au moins une arête de coupe qui est située sur ou près du côté avant, tourné vers la surface frontale (13), de la partie de coupe (37).

11. Système d'outil selon la revendication 10, **caractérisé en ce qu'**au moins un tranchant principal (7) est présent, lequel s'étend sur le côté avant du prolongement dans un plan parallèle à la surface de support (19).

12. Système d'outil selon la revendication 11, **caractérisé en ce que** le côté avant du prolongement comprend une face d'attaque (49) se raccordant au tranchant principal (7) et présentant une faible courbure (51).

13. Système d'outil selon l'une quelconque des revendications 10 à 12, **caractérisé en ce que** le bloc de l'outil de coupe (3) présente, au moins sur la majeure partie de la partie de fixation (35), un contour globalement en forme de coin et pourvu de parois latérales (41) qui divergent en forme de V à partir d'une région sommitale (39) opposée au prolongement.

14. Système d'outil selon la revendication 13, **caractérisé en ce que** le siège (21) comprend, pour la coopération avec les parois latérales (41) de la partie de fixation (35) de l'outil de coupe (3), des parois de siège (25) présentant une allure divergeant radialement vers l'extérieur à partir d'une base de renfoncement (23).

15. Système d'outil selon la revendication 14, **caractérisé en ce que** les parois latérales (41), coopérant avec les parois de siège (25), de la partie de fixation (35) de l'outil de coupe (3) comprennent des régions partielles s'écartant du plan.

16. Système d'outil selon la revendication 15, **caractérisé en ce que** la base (23) du renfoncement formant le siège (21) de la queue (1) comprend un évidement (43) formant un espacement entre le sommet de la forme de coin de la partie de fixation (35) et/ou la région sommitale (39) de la partie de fixation (35) présente un raccourcissement produisant cet espacement.

17. Support pour un outil de coupe d'un système d'outil selon l'une quelconque des revendications 1 à 16, comprenant une surface de support (19, 27) pour l'appui d'un outil de coupe (3) pouvant être serré au moyen d'un dispositif de serrage (31, 29) et comprenant un espace de fluide (51) réalisé sur la surface de support (19, 27), lequel est en liaison fluidique avec un dispositif d'alimentation (53, 55), se trouvant dans le support (1), pour du lubrifiant de refroidissement,
**caractérisé en ce qu'**un alésage fileté (29) pour la vis de serrage (31) est situé dans le support (1) à l'intérieur de la surface de support (19, 27), et l'espace de fluide (51) est formé par un élargissement (50) de la portion d'extrémité de l'alésage fileté (29) formant un renfoncement dans la surface de support (19, 27).
